(19) Europäisches Patentamt
European Patent Office
Office européen des brevets

(11) Publication number: 0 188 381
B1

(12) EUROPEAN PATENT SPECIFICATION

(45) Date of publication of the patent specification: 16.05.90

(51) Int. Cl.[5]: H01B 1/12

(21) Application number: 86300267.1

(22) Date of filing: 16.01.86

(54) **Electrically conductive adhesive, method for its manufacture and biomedical electrode.**

(30) Priority: 16.01.85 JP 5488/85

(43) Date of publication of application: 23.07.86 Bulletin 86/30

(45) Publication of the grant of the patent: 16.05.90 Bulletin 90/20

(84) Designated Contracting States: DE FR GB SE

(56) References cited:
EP-A- 0 012 402
EP-A- 0 163 576
WO-A-81/02097

(73) Proprietor: KYOWA GAS CHEMICAL INDUSTRY CO., LTD., 8-2, 3-chome, Nihonbashi, Chuo-ku, Tokyo(JP)

(72) Inventor: Nakao, Kozo, 3A-307, 2, Kyowa-cho Nakajomachi, Kitakanbara-gun Niigata-ken(JP)
Inventor: Hirokawa, Susumu, 3-4, 7, Wakamatsu-cho Nakajomachi, Kitananbara-gun Niigata-ken(JP)

(74) Representative: Sheard, Andrew Gregory et al, Kilburn & Strode 30, John Street, London WC1N 2DD(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

This invention relates to a substance suitable for use as an electrically conductive adhesive, a method for the manufacture thereof, and a bio-medical electrode using the electrically conductive adhesive as an essential component thereof.

Electrodes to be used for the living body are known in the field of clinical medicine. Generally, such an electrode is provided with an electrically conductive material such as a metallic plate having a conductive wire connected thereto. This wire is connected to a therapeutic apparatus or to a medical measuring instrument. Sometimes, an electrically conductive paste, cream or gel is applied to the skin of a patient for the purpose of improving the electrical connection between the skin and the electrically conductive material of the electrode. The electrically conductive paste, cream, or gel which has been used to date for this purpose is slimy and unpleasant. The practice of using such a material entails the troublesome chore of removing the material after use by wiping; and there are people who find this irritating.

To improve the situation, the so-called dry type electrode using an electrically conductive adhesive as its basic component was developed. In this dry electrode, the electrically conductive adhesive serves to enhance the flow of electricity between the skin and the electrode and ensures adhesion of the electrode to the skin. One known version of this dry electrode uses an adhesive agent incorporating therein an electrically conductive filler formed to particles of metal or a metal salt. This version has a problem concerning the ability to transmit electric signals.

Another known version of the dry electrode makes use of a natural polymer such as karaya rubber. The natural polymer is liable to be affected by such factors as origin and weather conditions and it is not easy to get constant quality owing to variability of its impurity content. So studies have been under way in search of an electrically conductive synthetic polymer suitable for an adhesive agent in dry electrodes. As synthetic polymers of this nature there have been proposed: an adhesive incorporating a cohesive synthetic hydrophilic polymer containing at least 5 mol% of a carboxylate monomer unit, the polymer being non-stimulating yet highly adaptable (US-A 4 273 135); an adhesive agent formed of a water-soluble monomer, a nonionic water soluble interpolymer of a water-soluble monomer with a water-insoluble monomer, or a nonionic water-insoluble interpolymer of a water-soluble monomer with a water-insoluble monomer containing at least 15% of water-soluble monomer (Japanese Patent Laid-open SHO 56(1981)-36 940); and an electrically conductive adhesive obtained by radically polymerizing a water-soluble polyhydric alcohol, an unsaturated carboxylate soluble in the polyhydric alcohol, and a radically polymerizable polyfunctional unsaturated monomer (WO-A 8 102 097).

WO 8 102 097 (3 M's) describes a conductive adhesive. The adhesive is a polymer formed from an adhesive precursor comprising a water soluble polyhydric alcohol (such as ethylene glycol), an ionic unsaturated polymerisable material (such as acrylate salts), a free radical initiator, and also a cross-linking agent such as ethylene glycol-bis-methacrylate.

EP 12 402 (Medtronic) also describes an electrically conductive polymer which has adhesive properties. In this case, the polymer is formed by polymerising 2-acrylamido-2-methylpropane-sulphonic acid in water and/or an alcohol such as propylene glycol.

The following disadvantage constitutes one of the reasons for the persistent demand for a new dry electrode. In consequence of the different methods of use, there are times when the polymer is left standing after being taken out of its package. When this happens, there is the possibility that ageing will have adverse effects manifested by a change in various essential and useful properties of the polymer, which include: readily adhering to the patient's skin under a slight pressure; resisting separation from the skin when the patient perspires or moves; being sufficiently soft to adhere closely to the skin where it is of complex shape but continuous; and not leaving any adhesive residue on the patient's skin after use. There are times when it is necessary for a polymer that has been taken out of its package to be first coated on its surface, for example with a film, to keep it clean. It should be noted that dry electrodes using such polymers require, in packaging, the use of a film which has been treated with a peeling agent; none of the electrodes so far developed is easy to apply to and then separate from conventional film which has not been so treated.

An object of this invention is to provide a novel electrically conductive adhesive and a method for its manufacture.

Another object of this invention is to provide a biomedical electrode using the novel electrically conductive adhesive as its essential component.

In a first aspect, the invention provides an electrically conductive adhesive which is formable by polymerizing and cross-linking (a) a radically polymerizable ionic unsaturated monomer soluble in a mixture of a water-soluble polyhydric alcohol and water, (b) a trialkoxysilylalkyl (meth)acrylate, represented by the general formula I:

$$CH_2 = C(R^1) - COO(CH_2)_nSi(OR^2)_3 \qquad (I)$$

wherein $R^1$ represents a hydrogen atom or a methyl group, $R^2$ represents an alkyl group of 1 or 2 carbon atoms, and n is an integer of the value of 2 or 3, and (c) a (meth)acrylate represented by the general formula II:

$$CH_2 = C(R^1) - COO\text{—}(CH_2CH_2O)_m\text{—}R^3 \qquad (II)$$

wherein $R^1$ represents a hydrogen atom or a methyl group, $R^3$ represents a hydrogen atom or an alkyl group of 1 to 4 carbon atoms, and m is an integer of the value of from 1 to 23, in the presence of (d) a water-soluble polyhydric alcohol and (e).

Ingredients (d) and (e) will generally be present in such proportions that ingredient (a) is soluble in a mixture of them in those proportions.

In a second aspect, the invention provides a method for the manufacture of an electrically conductive adhesive, the method comprising polymerizing and cross-linking (a) a radically polymerizable ionic unsaturated monomer soluble in a mixture of a water-soluble polyhydric alcohol with water, (b) a trialkoxysilylalkyl (meth)acrylate represented by general formula I, and (c) a (meth)acrylate represented by general formula II in the presence of a mixture of (d) a water-soluble polyhydric alcohol and (e) water, and (f) a polymerization initiator soluble in the mixture of the water-soluble polyhydric alcohol and water.

Further, in a third aspect the invention provides a biomedical electrode having an electrically conductive adhesive in accordance with the first aspect as an essential component.

For a better understanding of the present invention, and to show how it may be put into effect, reference will now be made by way of example to the accompanying drawings, in which:

Figures 1–4 are cross sections illustrating a typical biomedical electrode embodying the present invention; and

Figure 5 is a circuit diagram for measurement of the electrode pair impedance of a biomedical electrode embodying this invention.

Examples of the water-soluble polyhydric alcohol which may be used in this invention include ethylene glycol, diethylene glycol, triethylene glycol, propylene glycol, trimethylene glycol, dipropylene glycol, 1,2-butanediol, 1,3-butanediol, 1,4-butanediol, 1,5-pentanediol, hexanediol, neopentyl glycol, dibromoneopentyl glycol, trimethyl pentanediol, trimethylol ethane, trimethylol propane, pentaerythritol, dipentaerythritol, glycerin diglycerol and sorbitol. Among other polyhydric alcohols enumerated above, glycerol proves particularly desirable. The amount of the water-soluble polyhydric alcohol to be used may be in the range of from 10 to 80% by weight, preferably from 30 to 70% by weight, based on the total amount of the reactants used.

The amount of water to be used in combination with the water-soluble polyhydric alcohol may be in the range of from 5 to 40% by weight, preferably from 7 to 30% by weight. Optionally, this water may be used in conjunction with an electrolyte, such as sodium chloride, potassium chloride, lithium chloride, ammonium chloride, calcium chloride, or magnesium chloride. The amount of the electrolyte so used may be in the range of from 0.5 to 20% by weight, preferably from 3 to 15% by weight, based on the amount of water.

The ionic monomer to be used in the present invention is required to be soluble in the mixture of the aforementioned water-soluble polyhydric alcohol with water. Preferably, it is an anionic monomer. The amount of the ionic monomer to be used may be in the range of from 10 to 40% by weight, preferably 15 to 30% by weight, based on the amount of the reactants used. Desirable examples of the ionic monomer are unsaturated organic carboxylic acids such as acrylic acid, methacrylic acid, maleic acid, itaconic acid, and citraconic acid and salts thereof, preferably acrylic acid and methacrylic acid and salts thereof, unsaturated organic sulphonic acids such as styrene sulphonic acid, methallyl sulphonic acid, 2-sulphoethyl acrylate, 2-sulphoethyl methacrylate, 3-sulphopropyl acrylate, 3-sulphopropyl methacrylate, acrylamide-2-methylpropane sulphonic acid and their salts, and other radically polymerizable ionic monomers containing a carbon-carbon double bond, preferably sulphonic acid derivatives. Unsaturated organic sulphonic acids are especially preferred. Among the ionic monomers enumerated above, particularly desirable selections are 3-sulphopropyl-(meth)-acrylate, their salts, 2-acrylamide-2-methyl propane sulphonic acid, and their salts. Example of the cations involved in the formation of such salts

include sodium, potassium, lithium, and ammonium ions. These ionic monomers may be used singly or in the form of a mixture of two or more of them.

Typical examples of the trialkoxysilyalkyl (meth)acrylate represented by the general formula I:

$$CH_2 = \overset{\displaystyle R^1 \atop |}{C} - COO(CH_2)_nSi(OR^2)_3 \qquad (I)$$

wherein $R^1$ represents a hydrogen atom or a methyl group, $R^2$ represents an alkyl group of 1 or 2 carbon atoms, and n is an integer of the value of 2 or 3 (preferably 3) include 2-trimethoxysilylethyl acrylate, 2-trimethoxysilylethyl methacrylate, 2-triethoxysilylethyl acrylate, 2-triethoxysilylethyl methacrylate, 3-trimethoxysilylpropyl acrylate, 3-trimethoxysilylpropyl methacrylate, 3-triethoxysilylpropyl acrylate and 3-triethoxysilylpropyl methacrylate. Among the examples cited above, 3-trimethoxysilylpropyl (meth)acrylates and 3-triethoxysilylpropyl (meth)acrylates are particularly desirable selections. These trialkoxysilylalkyl (meth)acrylates are used either singly or in the form of a mixture of two or more of them. The amount of (meth)acrylate to be used may be in the range of from 0.05 to 1% by weight, preferably 0.1 to 0.5% by weight, based on the total amount of the reactants used.

Typical examples of (meth)acrylate represented by the general formula II:

$$CH_2 = \overset{\displaystyle R^1 \atop |}{C} - COO\!-\!\!\left(CH_2CH_2O\right)_{\overline{m}}\!-R^3 \qquad (II)$$

wherein $R^1$ is as defined for general formula I above (but is preferably a hydrogen atom or a methyl group), $R^3$ represents a hydrogen atom (which is preferred) or an alkyl group of 1 to 4, preferably 1 to 2, carbon atoms (a methyl group is particularly preferred), and m is an integer of the value of from 1 to 23, preferably 1 to 9, include 2-hydroxyethyl acrylate, 2-hydroxyethyl methacrylate (which is preferred), methoxyethyl acrylate, methoxyethyl methacrylate, ethoxyethyl (meth)acrylate, propoxyethyl (meth)acrylate, butoxyethyl (meth)acrylate, diethylene glycol mono(meth)acrylate, methoxydiethylene glycol mono(meth)acrylate, methoxytriethylene glycol mono(meth)acrylate, ethoxytriethylene glycol mono(meth)acrylate, methoxynonaethylene glycol mono(meth)acrylate, and methoxypolyethylene glycol mono(meth)acrylate. Among the (meth)acrylates cited above, 2-hydroxyethyl (meth)acrylate, methoxytriethylene glycol monoacrylate, and methoxynonaethylene glycol monoacrylate prove particularly desirable, and 2-hydroxyethyl methacrylate is most desirable. These (meth)acrylates are used either singly or in the form of a mixture of two or more members. The amount of a (meth)acrylate to be used may be in the range of 2 to 30% by weight, preferably 5 to 20% by weight, based on the total amount of the reactants used.

The electrically conductive adhesive of the present invention may be manufactured by any of the conventional methods available for radical polymerization. An example is a method which comprises mixing the aforementioned monomers, the polyhydric alcohol and water in a prescribed ratio and heating the mixture; another example comprises preparing the same mixture and irradiating the mixture with light, preferably ultraviolet light, in the presence of a photopolymerization initiator; or a method combining the two methods described above may be used. Of the methods referred to, the method which comprises irradiating the mixture with light, particularly ultraviolet light, in the presence of a photopolymerization initiator proves desirable because the irradiation serves to promote cross-linking.

Examples of thermal polymerization initiators include azobisisobutylonitrile, benzoyl peroxide, lauroyl peroxide, methylethyl ketone peroxide, lauroyl peroxide, cyclohexane peroxide, t-butylhydroperoxide, di-t-butyl peroxide di-t-amyl peroxide, dicumyl peroxide, and t-butyl perbenzoate. The amount of the thermal polymerization initiator to be used is usually in the range of from 0.05 to 1% by weight, preferably from 0.1 to 0.5% by weight, based on the total amount of the monomers used. The heating temperature is in the range of from 50° to 90°C, preferably from 60° to 80°C. The heating time is in the range of from 0.5 to 6 hours, preferably 1 to 3 hours.

Examples of photopolymerization initiators include benzoin alkyl ethers such as benzoin, benzoin isopropyl ether, and benzoin isobutyl ether; benzophenones such as benzophenone, and methyl-o-benzoyl benzoate; acetophenones such as acetophenone, trichloroacetophenone, 2,2-diethoxyacetophenone, p-t-butyltrichloro-acetophenone, 2,2-dimethoxy-2-phenylacetophenone, and p-dimethylamino-acetophenone; thioxanthones such as xanthone, thioxanthone, 2-chlorothioxanthone, and 2-isopropyl thioxanthone; benzyl 2-ethyl anthraquinone, methylbenzoyl formate, 2-hydroxy-2-methyl-1-phenyl propane-1-one, 2-hydroxy-4'-isopropyl-2-methyl propiophenone, 1-hydroxycyclohexyl phenyl ketone, tetramethyl

thiuram monosulphide, and allyl diazonium salt. The amount of the photopolymerization initiator to be used is usually in the range of from 0.05 to 1% by weight, preferably 0.1 to 0.5% by weight, based on the total amount of the monomers used. As to the dosage of the ultraviolet light, irradiation with the light from an ultraviolet lamp (chemical lamp) having a 6W power output (1.2 m tube length) separated by a distance of 15 cm, for example, may be continued for from 2 to 60 minutes, preferably from 4 to 20 minutes. The mixture to be polymerized may incorporate a sensitizer such as an amine compound, a sulphur compound, or a phosphorus compound when necessary or desirable.

An adhesive of the present invention may be produced by being polymerized on a substrate destined to form an electrode. Alternatively it may be produced applying a partially polymerized precursor on a substrate and then continuing polymerization until completion. Further, it may be produced by polymerizing on material which is capable of peeling but which does not constitute the electrode; such material may be a film or a plate, etc. Alternatively, the adhesive may be produced between such materials.

The adhesive may further incorporate a tackifier such as karaya rubber in a proportion which does not impair the objects of the invention.

An electrically conductive adhesive of the present invention can be manufactured by adopting a method which comprises blending a mixture of component monomers, solvent, etc with a polymerization initiator, and simultaneously effecting polymerization and cross-linking of the resultant blend.

The method of has the advantage that it permits a gelled adhesive of a desired shape to be produced through a single operational step from low viscosity raw materials. It is useful particularly because the composition involved in this invention can undergo polymerization and cross-linking simultaneously if a photopolymerization initiator is used and the mixture is irradiated with ultraviolet light.

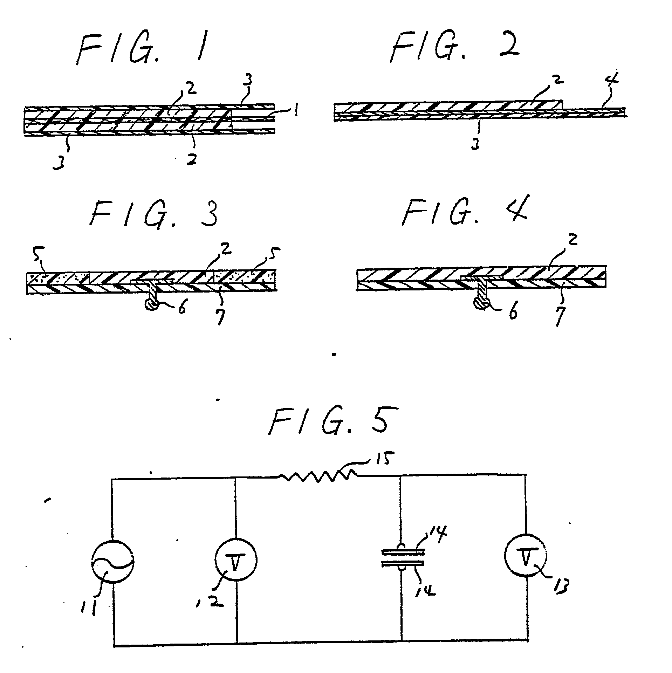

An electrically conductive adhesive obtained as described above can be used in a variety of constructions of biomedical electrodes. The electrode can be constructed to suit the particular purpose of use, so long as it includes an electrically conductive adhesive. For example, the biomedical electrode illustrated in Figure 1 comprises an electrically conductive adhesive layer 2 incorporating a reinforcing material 1 (such as a woven fabric like tricot or a non-woven fabric) and a protective film 3 (such as polyethylene terephthalate, polyethylene, or polypropylene) covering the opposite sides of the electrically conductive layer 2. At the time of actual use, the biomedical electrode is stripped of the protective film 2, attached on one side to the subject under test (such as the human body), and connected on the other side to a measuring instrument.

Figure 2 illustrates another typical biomedical electrode embodying this invention. It comprises an electrically conductive adhesive layer 2, an electrode 4 of metal foil superposed on the surface of the electrically conductive adhesive layer 2, and a protective film 3 covering the surface of the electrode 4. At the time of actual use, the electrode 4 is connected to a measuring instrument and, at the same time, the remaining surface of the electrically conductive adhesive layer 2 is held in contact with the subject under test.

Figure 3 illustrates yet another typical biomedical electrode embodying this invention. It comprises a support member 7 (circular in shape, for example) made of a plastics substance, an electrode 6 incorporated in the support 7 in such a manner as to protrude from both its sides, and an electrically conductive adhesive layer 2 (circular in shape, for example) superposed on one side of the support 7 and being of enough height to prevent the electrode protruding from the same side of the support 7, and a sponge layer 5 formed along the boundary of the electrically conductive adhesive layer 2. At the time of actual use, the electrode 6 is connected to a measuring instrument and the electrically conductive adhesive layer 2 is pressed against the subject under test. In this case, since the sponge layer 5 is readily deformed by pressure so as to seal the space between the electrically conductive gel and the exterior atmosphere, it plays a part in preventing a change in electrical properties due to an ingress of sterilizing solution.

Figure 4 illustrates a further typical biomedical electrode embodying the present invention. This is equivalent to the electrode of Figure 3, except that the sponge layer 5 is omitted and the electrically conductive adhesive layer 7 is enlarged to fill the space left by the omission.

The present invention will now be described more specifically below with reference to worked examples. Wherever parts and percentages are mentioned in the examples, they are meant as parts and percentages by weight unless otherwise specified.

Example 1

In 1,000 parts of [alpha-methoxytri(oxyethylene)-omega-yl]acrylate, 10 parts of 1-hydroxycyclohexyl phenyl ketone (product of Ciba-Geigy and marketed under trademark IRGACURE 184) was dissolved. In the resultant solution, 40 parts of 3-trimethoxysilylpropyl methacrylate was dissolved. (This solution is designated as Solution A.) Separately, 3,000 parts of potassium salt of sulphopropyl methacrylate was dissolved, by heating, in 2,000 parts of an aqueous 5% sodium chloride solution. (This solution is designated as Solution B.) A homogeneous solution was obtained by dissolving 5,600 parts of glycerol, 4,400 parts of Solution B, and 44 parts of acrylic acid in 1,050 parts of Solution A and deaerating the resultant solution.

On a polyester film 100 µm in thickness held horizontally and provided thereon with a frame adapted to keep a liquid therein, the homogeneous solution was cast to a thickness of 1 mm. The solution held the

polyester film was kept under an atmosphere of nitrogen and irradiated for 5 minutes with ultraviolet light emitted from two parallel 30 W chemical lamps (63 cm in bulb length) (product of Toshiba and marketed under product code FL30SBL) kept at a distance of 15 cm from the solution under treatment. A water-containing gel, having a viscosity proper to the skin and a cohesive force enough to avoid being torn on separation from the polyester film or on separation from the skin, was obtained. When this gel was left standing in the air, it showed substantially no increase or decrease of weight.

An electric circuit of the configuration shown in Figure 5 was obtained by cutting two squares of 3 cm from the gel obtained as described above, joining the two gel squares 14 and 14 face to face, and nipping the joined squares with nickel silver plates. An alternating current at 10 Hz was generated by an oscillator 11 and potential differences $V_1$ and $V_2$ were measured with voltage testers 12 and 13. By calculation, the electrode pair impedance was found to be 400 ohms. Even after a lapse of 24 hours, the value was 500 ohms. When the same pair of electrodes were attached one each to the wrists of a human subject, they registered an impedance of 20 kilohms. (In the diagram, the numerical symbol 15 denotes a resistance.)

Example 2

A solution was prepared by following the procedure of Example 1, except that [alpha-methoxynona(oxyethylene)-omega-yl]acrylate was used in the place of [alpha-methoxytri(oxyethylen)-omega-yl]-acrylate. On the same polyester film provided thereon with a frame as used in Example 1, a non-woven fabric of nylon (10 g in unit weight) was mounted and the solution was poured thereon to a thickness of about 1.5 mm. In the same apparatus as used in Example 1, the solution on the film was irradiated with ultraviolet light for 5 minutes in an atmosphere of nitrogen. The water-containing gel so obtained had satisfactory viscosity and cohesiveness.

The electrode pair impedance measured as in Example 1 was 600 ohms and the impedance measured through a human body was 30 kilohms.

Example 3

A solution was obtained by following the procedure of Example 1, except that the potassium salt of 2-acrylamide-2-methylpropane sulphonic acid was used in the place of the potassium salt of sulphopropyl methacrylate. On the polyester film, a knitted fabric of polyester (75 denier) was held at a height of 1 mm and the solution was poured thereon in a thickness of about 2 mm. Consequently, there was obtained a water-containing gel incorporating therein the knitted fabric of polyester.

The electrode pair impedance measured as in Example 1 was 900 ohms and the impedance measured through a human body was 40 kilohms.

Example 4

A water-containing gel similar to the gel of Example 3 was obtained by following the procedure of Example 1, except that potassium methacrylate was used in the place of potassium salt of sulphopropyl methacrylate and 3-triethoxysilylpropyl methacrylate was used in the place of 3-trimethoxysilylpropyl methacrylate.

The electrode pair impedance measured as in Example 1 was 1 kilohm and the impedance measured through a human body was 40 kilohms.

Example 5

In 1,600 parts of 2-hydroxyethyl methacrylate, 10 parts of [alpha-methoxytri(oxyethylene)-omega-yl]acrylate was dissolved, and then 40 parts of 3-trimethoxysilylpropyl methacrylate was dissolved in the solution so formed. In the resultant solution, 4,000 parts of Solution B of Example 1 and 5,600 parts of glycerin were dissolved and deaerated to obtain a homogeneous solution. The solution was poured into a space 2 of a shape made up as shown in Figure 3 (numerical symbols 5 and 7 are foamed polybutadiene having independent cells, numerical 6 is a metallic foil treated with silver/silver chloride on the surface, the polybutadiene 5 and 7 is 42 mm in outer diameter and 1 mm in thickness, 25 mm in inner diameter, and the surface of the polybutadiene 5 is treated with the adhesive), and was irradiated by ultraviolet light in a nitrogen atmosphere by a similar manner to Example 1. The two electrode thus obtained were superposed and electrode pair impedance was measured to obtain 300 ohms at 10 Hz.

Example 6

In a mixed solution of 200 parts of 2-hydroxyethyl acrylate and 1,000 parts of [alpha-methoxynona(oxyethylene)-omega-yl]acrylate, 10 parts of benzoin ethyl ether were dissolved. To the resultant solution, 40 parts of 3-trimethoxysilylpropyl methacrylate was added. The solution so produced is designated as solution A.

In 2,500 parts of an aqueous 3% sodium chloride solution, 2,500 parts of the potassium salt of 3-sulphopropyl acrylate was dissolved. The solution so produced was designated as solution B. The solution designated as a homogeneous solution was obtained by mixing 1,250 parts of solution A, 4,800 parts of solution B, 6,400 parts of glycerin, and 32 parts of acrylic acid. On a tin foil, this homogeneous solution was cast to a thickness of 1 mm and irradiated for 30 minutes with the ultraviolet light from chemical lamps. There was thus obtained a water-containing gel adhering to the tin foil. The gel adhered fast to the tin foil.

For the measurement of impedance, the gel as deposited fast on the tin foil was cut to obtain two squares of 3 cm and lead wires were connected to the tin foils to complete a circuit similar to the circuit of Example 1. The electrode pair impedance was 400 ohms and the impedance measured through a human body was 20 kilohms.

## Claims

1. An electrically conductive adhesive, formable by polymerizing and cross-linking
(a) a radically polymerizable ionic unsaturated monomer soluble in a mixture of a water-soluble polyhydric alcohol with water,
(b) a trialkoxysilylalkyl (meth)acrylate represented by general formula I:

$$CH_2 = \overset{\overset{\large R^1}{|}}{C} - COO(CH_2)_nSi(OR^2)_3 \qquad (I)$$

wherein $R^1$ represents a hydrogen atom or a methyl group, $R^2$ an alkyl group of 1 or 2 carbon atoms, and n an integer of the value of 2 or 3, and
(c) a (meth)acrylate represented by general formula II:

$$CH_2 = \overset{\overset{\large R^1}{|}}{C} - COO{-}(CH_2CH_2O)_m{-}R^3 \qquad (II)$$

wherein $R^1$ represents a hydrogen atom or a methyl group, $R^3$ represents a hydrogen atom or an alkyl group of 1 to 4 carbon atoms, and m is an integer of the value of from 1 to 23, in the presence of
(d) a water-soluble polyhydric alcohol and
(e) water.

2. An electrically conductive adhesive according to Claim 1, wherein the amount of (a) the radically polymerizable ionic unsaturated monomer is in the range of from 10 to 40% by weight, that of (b) the trialkoxysilylalkyl(meth)acrylate of general formula I in the range of from 0.05 to 1% by weight, that of (c) the (meth)acrylate of general formula II in the range of from 2 to 30% by weight, that of (d) the water-soluble polyhydric alcohol in the range of from 10 to 80% by weight, and that of (e) the water in the range of from 5 to 40% by weight based on the total amounts.

3. An electrically conductive adhesive according to Claim 1 or 2, wherein the radically polymerizable ionic unsaturated monomer is one or more unsaturated organic carboxylic acids, unsaturated organic sulphonic acids, or salts of them.

4. An electrically conductive adhesive according to Claim 1, 2 or 3, wherein n in general formula I is 3.

5. An electrically conductive adhesive according to any one of Claims 1 to 4, wherein the amount of (a) the radically polymerizable ionic unsaturated monomer is in the range of from 15 to 30% by weight, that of (b) the trialkoxysilylalkyl(meth)acrylate of general formula I in the range of from 0.1 to 0.5% by weight based on the total amount of the monomeric reactants, that of (c) the (meth)acrylate of general formula II in the range of from 5 to 20% by weight based on the total amount of the monomeric reactants, that of (d) the water-soluble polyhydric alcohol in the range of from 30 to 70% by weight, and that of (e) the water in the range of from 7 to 30% by weight.

6. A method for the manufacture of an adhesive agent, which comprises polymerizing and cross-linking
(a) a radically polymerizable ionic unsaturated monomer soluble in a mixture of a water-soluble polyhydric alcohol with water,
(b) a trialkoxysilylalkyl (meth)acrylate represented by general formula I:

$$CH_2 = \underset{\displaystyle |}{\overset{R^1}{C}} - COO(CH_2)_nSi(OR^2)_3 \qquad (I)$$

wherein $R^1$ represents a hydrogen atom or a methyl group, $R^2$ an alkyl group or 1 or 2 carbon atoms, and n an integer of the value of 2 or 3, and
(c) a (meth)acrylate represented by the general formula II:

$$CH_2 = \overset{R^1}{\underset{}{C}} - COO\!-\!\!(CH_2CH_2O)_{\overline{m}}\!-\!R^3 \qquad (II)$$

wherein $R^1$ represents a hydrogen atom or a methyl group, $R^3$ represents a hydrogen atom or an alkyl group of 1 to 4 carbon atoms, and m is an integer of the value of from 1 to 23, in the presence of
(d) a water-soluble polyhydric alcohol, (e) water, and (f) a polymerization initiator soluble in the mixture of the water-soluble polyhydric alcohol with water.

7. A method according to Claim 6, wherein the amount of (a) the radically polymerizable ionic unsaturated monomer is in the range of from 10 to 40% by weight, that of (b) the trialkoxysilylalkyl(meth)acrylate of general formula I in the range of from 0.05 to 1% by weight, that of (c) the (meth)acrylate of general formula II in the range of from 2 to 30% by weight, that of (d) the water-soluble polyhydric alcohol in the range of from 10 to 80% by weight, and that of (e) the water in the range of from 5 to 40% by weight based on total amounts.

8. A method according to Claim 6 or 7, wherein the polymerization initiator is a photopolymerization initiator.

9. A method according to Claim 8, wherein the polymerization and cross-linking are effected by irradiation with light.

10. A biomedical electrode including electrically conductive adhesive as claimed in any one of Claims 1 to 5.

## Patentansprüche

1. Elektrisch leitfähiger Klebstoff, ausbildbar durch Polymerisierung und Brückenbindung
(a) eines radikal-polymerisierbaren ionischen, ungesättigten, in einem Gemisch aus einem wasserlöslichen mehrwertigen Alkohol und Wasser löslichen Monomers,
(b) eines Trialkoxysilylalkyl(meth)acrylates der allgemeinen Formel I:

$$CH_2 = \overset{R^1}{C} - COO(CH_2)_nSi(OR^2)_3 \qquad (I)$$

in der $R^1$ ein Wasserstoffatom oder eine Methylgruppe, $R^2$ eine Alkylgruppe mit 1 oder 2 C-Atomen und n eine ganze Zahl mit dem Wert 2 oder 3 bedeuten, sowie
(c) eines (Meth)acrylates der allgemeinen Formel II:

$$CH_2 = \overset{R^1}{C} - COO\!-\!\!(CH_2CH_2O)_{\overline{m}}\!-\!R^3 \qquad (II)$$

in der $R^1$ ein Wasserstoffatom oder eine Methylgruppe, $R^3$ ein Wasserstoffatom oder eine Alkylgruppe mit 1 bis 4 C-Atomen und m eine ganze Zahl mit einem Wert von 1 bis 23 bedeuten, in Gegenwart eines
(d) wasserlöslichen mehrwertigen Alkohols und
(e) von Wasser.

2. Elektrisch leitfähiger Klebstoff nach Anspruch 1, bei dem die Menge des radikal-polymerisierbaren ionischen, ungesättigten Monomers von (a) im Bereich von 10 bis 40 Gewichtsprozent, die des Trialkoxysilylalkyl(meth)acrylates der allgemeinen Formel I von (b) im Bereich von 0,05 bis 1 Gewichtsprozent, die des (Meth)acrylates der allgemeinen Formel II von (c) im Bereich von 2 bis 30 Gewichtsprozent, die des wasserlöslichen mehrwertigen Alkohols von (d) im Bereich von 10 bis 80 Gewichtsprozent und die des Wassers von (e) im Bereich von 5 bis 40 Gewichtsprozent, bezogen auf die Gesamtmengen, liegen.

3. Elektrisch leitfähiger Klebstoff nach Anspruch 1 oder 2, bei dem als das radikal-polymerisierbare ionische, ungesättigte Monomer eine oder mehrere ungesättigte organische Carbonsäuren, eine oder mehrere ungesättigte organische Sulfonsäuren oder Salze derselben eingesetzt werden.

4. Elektrisch leitfähiger Klebstoff nach Anspruch 1, 2 oder 3, bei dem n in der allgemeinen Formel I den Wert 3 hat.

5. Elektrisch leitfähiger Klebstoff nach einem der Ansprüche 1 bis 4, bei dem die Menge des radikal-polymerisierbaren ionischen, ungesättigten Monomers von (a) im Bereich von 15 bis 30 Gewichtsprozent, die des Trialkoxysilylalkyl(meth)acrylates der allgemeinen Formel I von (b) im Bereich von 0,1 bis 0,5 Gewichtsprozent, bezogen auf die Gesamtmenge der monomeren Reaktionspartner, die des (Meth)acrylates der allgemeinen Formel II von (c) im Bereich von 5 bis 20 Gewichtsprozent, bezogen auf die Gesamtmenge der monomeren Reaktionspartner, die des wasserlöslichen mehrwertigen Alkohols von (d) im Bereich von 30 bis 70 Gewichtsprozent und die des Wassers von (e) im Bereich von 7 bis 30 Gewichtsprozent liegen.

6. Verfahren zur Herstellung eines Klebstoffes, mit einer Polymerisierung und einer Brückenbindung
(a) eines radikal-polymerisierbaren ionischen, ungesättigten, in einem Gemisch aus einem wasserlöslichen mehrwertigen Alkohol und Wasser löslichen Monomers,
(b) eines Trialkoxysilylalkyl(meth)acrylates der allgemeinen Formel I:

$$CH_2 = \overset{\displaystyle R^1 \atop |}{C} - COO(CH_2)_nSi(OR^2)_3 \qquad (I)$$

in der $R^1$ ein Wasserstoffatom oder eine Methylgruppe, $R^2$ eine Alkylgruppe mit 1 oder 2 C-Atomen und n eine ganze Zahl mit dem Wert 2 oder 3 bedeuten, und
(c) eines (Meth)acrylates der allgemeinen Formel II:

$$CH_2 = \overset{\displaystyle R^1 \atop |}{C} - COO\!-\!\!\!-(CH_2CH_2O)_m\!-\!R^3 \qquad (II)$$

in der $R^1$ ein Wasserstoffatom oder eine Methylgruppe, $R^3$ ein Wasserstoffatom oder eine Alkylgruppe mit 1 bis 4 C-Atomen und m eine ganze Zahl mit einem Wert von 1 bis 23 bedeuten, in Gegenwart eines
(d) wasserlöslichen mehrwertigen Alkohols,
(e) von Wasser und
(f) eines im Gemisch aus dem wasserlöslichen mehrwertigen Alkohol und Wasser löslichen Polymerisationsinitiators.

7. Verfahren nach Anspruch 6, bei dem die Menge des radikal-polymerisierbaren ionischen, ungesättigten Monomers von (a) im Bereich von 10 bis 40 Gewichtsprozent, die des Trialkoxysilylalkyl(meth)acrylates der allgemeinen Formel I von (b) im Bereich von 0,05 bis 1 Gewichtsprozent, die des (Meth)acrylates der allgemeinen Formel II von (c) im Bereich von 2 bis 30 Gewichtsprozent, die des wasserlöslichen mehrwertigen Alkohols von (d) im Bereich von 10 bis 80 Gewichtsprozent und die des Wassers von (e) im Bereich von 5 bis 40 Gewichtsprozent, bezogen auf die Gesamtmengen, liegen.

8. Verfahren nach Anspruch 6 oder 7, bei dem der Polymerisationsinitiator ein Photo-Polymerisationsinitiator ist.

9. Verfahren nach Anspruch 8, bei dem die Polymerisation und die Brückenbindung durch Lichtbestrahlung bewirkt werden.

10. Biomedizinische Elektrode enthaltend elektrisch leitfähigen Klebstoff nach einem der Ansprüche 1 bis 5.

## Revendications

1. Adhésif électriquement conducteur, obtenu par polymérisation et réticulation
(a) d'un monomère insaturé ionique polymérisable radicalairement soluble dans un mélange dans l'eau de polyalcool hydrosoluble,
(b) d'un (méth)acrylate de trialcoxysilylalkyle représenté par la formule générale I:

$$CH_2=\overset{R^1}{\overset{|}{C}}-COO(CH_2)_nSi(OR^2)_3 \qquad (I)$$

dans laquelle $R^1$ représente un atome d'hydrogène ou un groupe méthyle, $R^2$ un groupe alkyle de 1 ou 2 atomes de carbone, et n est un entier représentant 2 ou 3, et
(c) un (méth)acrylate représenté par la formule générale II:

$$CH_2=\overset{R^1}{\overset{|}{C}}-COO-(CH_2CH_2O)_m-R^3 \qquad (II)$$

dans laquelle $R^1$ représente un atome d'hydrogène ou un groupe méthyle, $R^3$ représente un atome d'hydrogène ou un groupe alkyle de 1 à 4 atomes de carbone, et m est un entier compris entre 1 et 23, en présence
(d) d'un polyalcool hydrosoluble dans l'eau et
(e) d'eau.

2. Adhésif électriquement conducteur selon la revendication 1, dans lequel la quantité (a) de monomère insaturé ionique polymérisable radicalairement est comprise dans l'intervalle de 10 à 40% en poids, celle (b) du (méth)acrylate de trialcoxysilylalkyle de formule générale I est comprise dans l'intervalle de 0,05 à 1% en poids, celle (c) du (méth)acrylate de formule générale II est comprise dans l'intervalle de 2 à 30% en poids, celle (d) du polyalcool hydrosoluble est comprise dans l'intervalle de 10 à 80% en poids et celle (e) de l'eau est comprise dans l'intervalle de 5 à 40% en poids par rapport aux quantités totales.

3. Adhésif électriquement conducteur selon la revendication 1 ou 2, dans lequel le monomère insaturé ionique polymérisable radicalairement est constitué d'un ou plusieurs acides carboxyliques organiques insaturés, acides organiques insaturés sulfoniques, ou leurs sels.

4. Adhésif électriquement conducteur selon la revendication 1, 2 ou 3, dans lequel n est 3 dans la formule générale I.

5. Adhésif électriquement conducteur selon l'une quelconque des revendications 1 à 4, dans lequel la quantité (a) du monomère insaturé ionique polymérisable radicalairement est comprise dans l'intervalle de 15 à 30% en poids, celle (b) du (méth)acrylate de trialcoxysilylalkyl(méth)acrylate de formule générale I est comprise dans l'intervalle de 0,1 à 0,5% en poids par rapport à la quantité totale de réactifs monomères, celle (c) du (méth)acrylate de formule générale II est comprise dans l'intervalle de 5 à 20% en poids par rapport à la quantité totale de réactifs monomères, celle (d) du polyalcool hydrosoluble est comprise dans l'intervalle de 30 à 70% en poids, et celle (e) de l'eau est comprise dans l'intervalle de 7 à 30% en poids.

6. Procédé de fabrication d'un agent adhésif qui comprend la polymérisation et la réticulation
(a) d'un monomère insaturé ionique polymérisable radicalairement soluble dans un mélange dans l'eau de polyalcool hydrosoluble,
(b) d'un (méth)acrylate de trialcoxysilylalkyle représenté par la formule générale I:

$$CH_2=\overset{R^1}{\overset{|}{C}}-COO(CH_2)_nSi(OR^2)_3 \qquad (I)$$

dans laquelle $R^1$ représente un atome d'hydrogène ou un groupe méthyle, $R^2$ un groupe alkyle de 1 ou 2 atomes de carbone, et n est un entier représentant 2 ou 3, et
(c) un (méth)acrylate représenté par la formule générale II:

$$CH_2=\overset{\displaystyle R^1}{\overset{|}{C}}-COO-\!\!\left(CH_2CH_2O\right)_m\!-R^3 \qquad (II)$$

dans laquelle $R^1$ représente un atome d'hydrogène ou un groupe méthyle, $R^3$ représente un atome d'hydrogène ou un groupe alkyle de 1 à 4 atome de carbone, et m est un entier compris entre 1 et 23, en présence

(d) d'un polyalcool hydrosoluble,

(e) d'eau, et

(f) d'un initiateur de polymérisation soluble dans le mélange de polyalcool hydrosoluble avec l'eau.

7. Procédé selon la revendication 6, dans lequel la quantité (a) de monomère insaturé ionique polymérisable radicalairement est comprise dans l'intervalle de 10 à 40% en poids, celle (b) du (méth)acrylate de trialcoxysilylalkyle de formule générale I est comprise dans l'intervalle de 0,05 à 1% en poids, celle (c) du (méth)acrylate de formule générale II est comprise dans l'intervalle de 2 à 30% en poids, celle (d) du polyalcool hydrosoluble est comprise dans l'intervalle de 10 à 80% en poids et celle (e) de l'eau est comprise dans l'intervalle de 5 à 40% en poids par rapport aux quantités totales.

8. Procédé selon la revendication 6 ou 7, dans lequel l'initiateur de polymérisation est un initiateur de photopolymérisation.

9. Procédé selon la revendication 8, dans lequel la polymérisation et la réticulation sont effectuées par irradiation à la lumière.

10. Electrode biomédicale comprenant de l'adhésif électriquement conducteur selon l'une quelconque des revendications 1 à 5.

FIG. 1

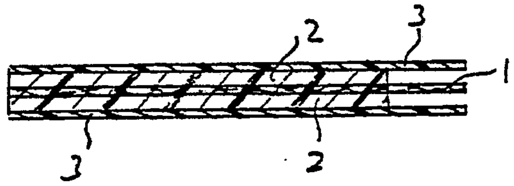


FIG. 2

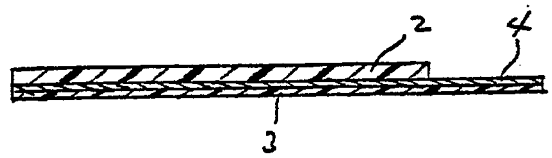


FIG. 3

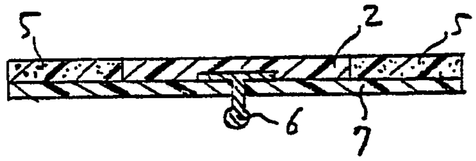


FIG. 4

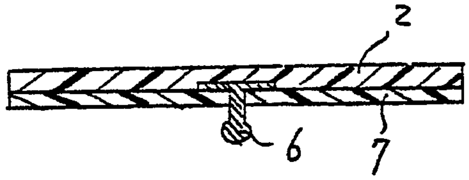


FIG. 5